# FASCICULE DE BREVET EUROPEEN

(11) **EP 3 147 205 B1**
(45) Date de publication et mention de la délivrance du brevet: **13.12.2017**
(21) Numéro de dépôt: 16189487.8
(22) Date de dépôt: 19.09.2016
(51) Int. Cl.: B64C 11/02, B64C 27/32

(54) **COUPOLE DE ROTOR, ROTOR ET GIRAVION**
ROTORVERKLEIDUNG, ROTOR UND DREHFLÜGELFLUGZEUG
ROTOR HUB CAP, ROTOR AND ROTORCRAFT

(30) Priorité: 28.09.2015 FR 1502003
(43) Date de publication de la demande: 29.03.2017
(73) Titulaire: Airbus Helicopters, 13725 Marignane Cedex (FR)
(72) Inventeur: ALFANO, David, 13090 Aix en Provence (FR); DESVIGNE, Damien, 13090 Aix en Provence (FR); FUKARI, Raphaël, 13740 Le Rove (FR)
(74) Mandataire: GPI & Associés

(56) Documents cités:
- EP-A1- 2 727 832
- DE-A1- 19 944 412
- FR-A1- 3 010 973

## Description

La présente invention concerne une coupole d'un rotor de sustentation d'un giravion, ainsi qu'un rotor et un giravion muni d'une telle coupole.

Un giravion comporte classiquement une cellule s'étendant d'un nez vers une poutre de queue. En général, une telle poutre de queue peut par ailleurs comporter des surfaces aérodynamiques stabilisatrices arrière telles que par exemple une dérive et des empennages.

La cellule peut porter au moins un rotor assurant au moins partiellement la sustentation voire la propulsion du giravion. Un tel rotor est dénommé « rotor de sustentation » par la suite, et parfois « rotor principal » par l'homme du métier.

En outre, la poutre de queue peut comporter des surfaces stabilisatrices arrière, notamment une dérive portant éventuellement un rotor pour contrôler le mouvement en lacet du giravion et générer un effort de poussée latérale permettant de compenser le couple de réaction créé par l'entraînement mécanique du rotor principal. Dès lors, ce rotor est parfois dénommé « rotor arrière » compte tenu de sa position au sein du giravion ou encore « rotor anticouple » compte tenu de sa fonction stabilisatrice.

La cellule comporte en outre des capots disposés sous le rotor principal. Ces capots peuvent être des capots mobiles permettant d'accéder à une installation motrice par exemple. De tels capots sont dénommés classiquement « capots moteur ».

Lors d'un vol de translation du giravion, l'air s'écoule le long de ce giravion. L'écoulement aérodynamique de l'air en aval du rotor de sustentation et des capots de la cellule est généralement perturbé. Ces perturbations peuvent alors impacter les surfaces stabilisatrices arrière ainsi que la poutre de queue du giravion.

Cet écoulement aérodynamique perturbé est usuellement dénommé « sillage ». En effet, le sillage d'un objet désigne la zone de fluide située en aval de l'objet, et qui présente une modification de son état par rapport à l'écoulement à l'infini.

L'impact des perturbations générées par un rotor de sustentation ou par les capots moteur, sur les surfaces aérodynamiques stabilisatrices d'un giravion engendre éventuellement une excitation d'origine aérodynamique d'un ou plusieurs modes de vibration de la poutre de queue, cette excitation étant communément dénommées « tail-shake » dans la technique aéronautique. Cette excitation présente de nombreux inconvénients, notamment :
- pour le confort de l'équipage et des passagers,
- pour la fatigue des pièces et des équipements, et
- pour le fonctionnement de certains systèmes du giravion.

En outre, un décollement de l'écoulement d'air sur la cellule peut se produire en aval d'un rotor de sustentation, notamment en aval de capots moteurs. Ce décollement tend à générer des tourbillons et par suite à augmenter l'intensité des excitations aérodynamiques sur les surfaces aérodynamiques stabilisatrices, ainsi qu'à enrichir la signature fréquentielle de ces excitations.

Pour réduire ces excitations, une coupole peut être agencée sur la tête du rotor de sustentation tel que décrit notamment par les documents US 3 181 815, EP 2 727 832, FR 3 010 973 et DE 199 44 412.

Ainsi, une coupole a généralement la forme d'une calotte de révolution sensiblement ellipsoïdale.

De plus, des alvéoles sont ménagées dans un anneau périphérique de la coupole pour notamment ne pas entraver les mouvements en pas, en battement et en traînée des pales.

Dès lors, une coupole peut comprendre une calotte ellipsoïdale de révolution munie d'une alvéole par pale du rotor.

Au cours d'un vol en translation, cette coupole dévie l'écoulement d'air en aval du rotor de sustentation vers le bas. Cet écoulement d'air est alors principalement dévié vers les capots et la poutre de queue, et non plus vers l'empennage et la dérive du giravion. L'effet « tail-shake » est alors diminué.

Par suite, une coupole tend à défléchir vers le bas l'écoulement aérodynamique d'air en aval d'un rotor de sustentation.

En outre, la coupole tend à limiter le décollement d'un écoulement aérodynamique d'air en aval des capots moteur.

Cependant, ces coupoles ne sont pas toujours optimisées.

En effet, une coupole est généralement dimensionnée pour rabattre vers le bas un écoulement aérodynamique d'air, et minimiser ledit décollement de cet écoulement aérodynamique d'air en aval du rotor de sustentation équipé de cette coupole. Ce dimensionnement en portance tend à déterminer le diamètre de la coupole.

Dès lors, la coupole ne laisse aucun moyen d'action sur la signature fréquentielle des écoulements aérodynamiques d'air générés, ni sur les efforts subis par la coupole. Un constructeur ne peut donc pas agir sur une coupole de forme donnée pour résoudre des problèmes d'interaction entre l'écoulement aérodynamique d'air et la coupole.

La présente invention a alors pour objet de proposer une coupole alternative permettant de remédier aux inconvénients mentionnés ci-dessus.

L'invention se rapporte donc à une coupole destinée à un rotor d'un giravion, cette coupole comprenant une calotte s'étendant radialement d'un axe de rotation en élévation vers une périphérie et en azimut sur 360 degrés, la calotte s'étendant en épaisseur entre une face intérieure destinée à être en regard d'un moyeu du rotor et une face extérieure surplombant de la face intérieure. Une telle périphérie est par ailleurs crénelée pour définir une succession de créneaux et d'alvéoles, chaque alvéole autorisant le mouvement de battement de la pale correspondante du rotor.

Cette coupole est remarquable en ce que les créneaux présentent chacun un profil aérodynamique au moins dans un plan de coupe perpendiculaire à l'axe de rotation en élévation, ce profil aérodynamique présentant :
- une épaisseur variable mesurée entre la face intérieure et la face extérieure,
- un extrados formé par la face extérieure ainsi qu'un intrados formé par la face intérieure, et
- un bord d'attaque arrondi comportant un premier rayon de courbure ainsi qu'un bord de fuite arrondi comportant un second rayon de courbure.

Autrement dit, les créneaux de la calotte ne comportent aucune arête vive. L'extrados et l'intrados du profil aérodynamique se rejoignent des deux cotés en formant des courbes arrondies. En outre, par l'expression de bord d'attaque "arrondi" ou de bord de fuite "arrondi", on désigne deux bords du profil aérodynamique tangents à des cercles permettant ainsi d'affecter un rayon de courbure à chacun des bords du profil aérodynamique des créneaux de la coupole. Un tel agencement permet en outre de réduire le coefficient de trainée aérodynamique et le sillage d'une telle coupole.

Avantageusement, le plan de coupe peut être positionné à mi-hauteur des alvéoles.

Dans ce cas, au moins au niveau de la demi-hauteur des alvéoles, les créneaux présentent chacun un profil aérodynamique. La hauteur des alvéoles est par ailleurs définie comme étant la distance mesurée suivant l'axe de rotation en élévation entre le point le plus haut de l'alvéole et la périphérie de la calotte.

En pratique, les créneaux de la calotte peuvent être identiques entre eux.

Ainsi, les différents profils de chaque créneau dans différents plans de coupe perpendiculaires à l'axe de rotation en élévation sont identiques à ceux des autres créneaux dans les mêmes plans de coupe perpendiculaires à l'axe de rotation en élévation.

En outre selon l'invention, le premier rayon de courbure du bord d'attaque des profils aérodynamiques des créneaux peut être égal au second rayon de courbure du bord de fuite des profils aérodynamiques des créneaux.

En d'autres termes, les deux formes arrondies rejoignant l'extrados et l'intrados d'un même profil comportent le même rayon de courbure, voire même dans certains cas, elles peuvent identiques.

Par ailleurs, de nombreuses formes particulières peuvent être envisagées pour le profil aérodynamique dans son ensemble de chaque créneau d'un plan de coupe.

Ainsi et selon un premier exemple de profil, le profil aérodynamique des créneaux peut être elliptique.

Un tel profil de forme elliptique est donc symétrique suivant deux axes perpendiculaires, respectivement appelés grand-axe et petit-axe de l'ellipse, le grand-axe étant confondu avec la corde du profil aérodynamique. Autrement dit dans ce cas, l'extrados et l'intrados sont symétriques par rapport à la corde du profil aérodynamique.

Selon un second exemple de profil, le profil aérodynamique des créneaux peut être dissymétrique.

Dans ce cas, un tel profil ne possède pas d'axe symétrie axiale. L'extrados et l'intrados décrivent des courbes distinctes l'une de l'autre.

Avantageusement, le profil aérodynamique des créneaux peut présenter une épaisseur relative comprise entre 10 et 30%.

Dans le domaine aéronautique, il est courant de désigner par l'expression d'"épaisseur relative" d'un profil, le rapport entre l'épaisseur maximale du profil, c'est-à-dire la distance maximale séparant l'extrados et l'intrados, et la corde du profil définie comme étant la distance entre le bord d'attaque et le bord de fuite du profil. Une telle épaisseur relative comprise entre 10 et 30% correspond ainsi à des profils épais.

En pratique, dans le plan de coupe perpendiculaire à l'axe de rotation en élévation, la corde du profil aérodynamique des créneaux, peut être inclinée d'un angle a par rapport à la tangente à la périphérie, l'angle α étant compris entre -30° et +30°.

Autrement dit, lorsque l'angle a, également appelé angle de calage, est nul, la corde des profils aérodynamiques est alors parallèle à la tangente à la périphérie. Par ailleurs, lorsque l'angle α est non nul, il peut varier d'un profil de créneau à l'autre dans un même plan de coupe ou encore sur un même créneau entre différents plans de coupe définissant différents profils d'un même créneau.

Selon une première variante de calotte, les créneaux peuvent comporter chacun une face plane inférieure agencée au niveau de la périphérie, cette face plane étant orientée perpendiculairement à l'axe de rotation en élévation.

Avantageusement, ces faces planes inférieures des différents créneaux peuvent également être coplanaires entre elles pour définir un plan inférieur de la calotte reliant les faces intérieure et extérieure de cette première variante de calotte.

Selon une seconde variante de calotte, les créneaux peuvent comporter chacun une face bombée inférieure agencée au niveau de la périphérie.

Ainsi, ces faces bombées peuvent définir des portions toroïdales reliant les faces intérieure et extérieure de cette seconde variante de calotte.

Outre une coupole, l'invention vise un rotor de giravion muni d'un moyeu portant une pluralité de pales. Ce rotor comporte alors une coupole du type décrit précédemment.

En outre, l'invention vise un giravion comportant au moins un rotor de ce type.

L'invention et ses avantages apparaîtront avec plus de détails dans le cadre de la description qui suit avec des exemples donnés à titre illustratif en référence aux figures annexées qui représentent :
- la figure 1, une vue de côté d'un giravion selon l'état de la technique dépourvu d'une coupole,
- la figure 2, une vue de côté d'un giravion selon l'invention,
- la figure 3, une vue en perspective d'une coupole selon l'état de la technique antérieure,
- la figure 4, une vue en perspective d'une coupole selon un premier mode de réalisation comportant des profils aérodynamiques elliptiques orientés avec un angle de calage α nul,
- les figures 5 et 6, des vues de dessous de la coupole de la figure 4,
- les figures 7 et 8, des vues de dessous d'une coupole selon un deuxième mode de réalisation comportant des profils aérodynamiques elliptiques orientés avec un angle de calage α non nul,
- la figure 9, une vue de dessous d'un profil aérodynamique dissymétrique,
- les figures 10 et 11, des vues de coté de deux variantes de calottes, conformément à l'invention,
- les figures 12 et 13, des vues en coupe représentatives d'un troisième et d'un quatrième modes de réalisation de coupoles conformes à l'invention, et
- la figure 14, une vue de côté selon un cinquième mode de réalisation d'une coupole conforme à l'invention.

Les éléments présents dans plusieurs figures distinctes sont affectés d'une seule et même référence.

On note que trois directions X, Y et Z orthogonales les unes par rapport aux autres sont représentées sur les figures et sont fixes par rapport au giravion pour définir un référentiel propre au giravion

La direction X est dite longitudinale et s'étend du nez vers la poutre de queue du giravion. Une autre direction Y est dite transversale. Enfin, une troisième direction Z est dite d'élévation et est sensiblement verticale lorsque le giravion est posé sur un support horizontal.

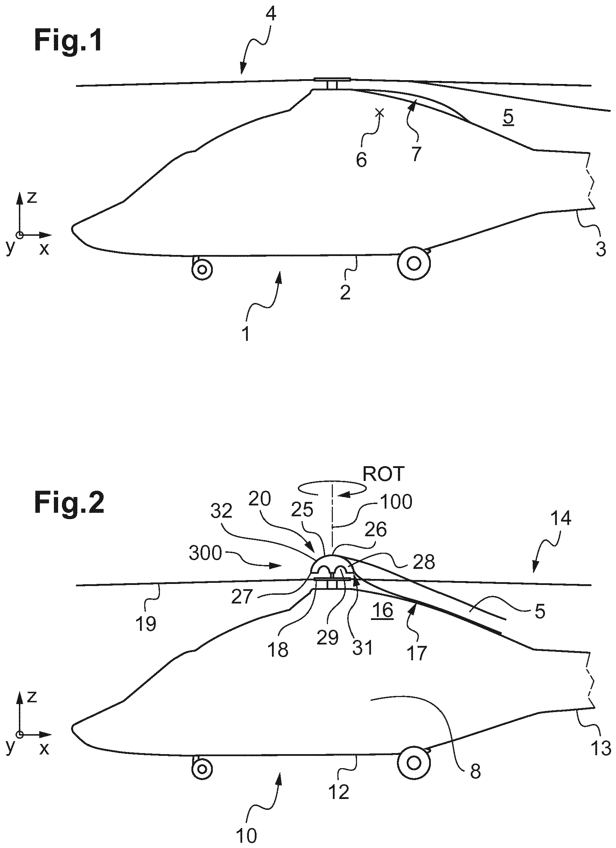

La figure 1 présente un giravion de l'état de la technique illustrant la problématique de l'invention.

Le giravion 1 est classiquement muni d'une cellule s'étendant d'un nez vers une poutre de queue 3. La poutre de queue 3 peut porter une dérive, des empennages, voire un rotor arrière.

La cellule porte au moins un rotor principal 4 assurant au moins partiellement la sustentation voire la propulsion du giravion.

Le sillage 5, généré par les parties hautes du giravion et notamment par l'écoulement d'air produit par le rotor 4, est susceptible d'impacter la poutre de queue du giravion, et en particulier la dérive et les empennages.

En outre, un décollement de ce sillage 5 tend à se produire au niveau d'une zone de décollement 7 de la cellule située à proximité de capots moteur 6.

La figure 2 présente un giravion 10 selon l'invention.

Le giravion 10 est muni d'une cellule 8 s'étendant d'un nez vers une poutre de queue 13. La cellule 8 porte au moins un rotor principal 14 assurant au moins partiellement la sustentation voire la propulsion du giravion. Le rotor 14 comporte alors un moyeu 18 portant une pluralité de pales 19.

De plus, le rotor 14 comporte une coupole 20 selon l'invention.

La coupole 20 est ainsi munie d'une calotte 25, par exemple sphérique. Cette calotte 25 est par exemple fixée au moyeu 18 pour être solidaire en rotation du rotor principal 14.

Cette calotte 25 s'étend radialement d'un axe de rotation en élévation 100 vers une périphérie 27. Ainsi, lorsque la calotte 25 est solidaire en rotation du rotor principal 14, l'axe de rotation en élévation 100 est alors confondu avec l'axe de rotation du rotor principal 14 et est proche de la direction d'élévation Z.

La calotte 25 s'étend en outre en azimut sur 360 degrés. La calotte 25 s'étend de plus en élévation selon son épaisseur d'une face intérieure 31 en regard du moyeu 18 vers une face extérieure 32. Le centre de chaque face est alors agencé sur l'axe de rotation en élévation 100.

De plus, la calotte 25 comporte une forme crénelée définissant une succession de créneaux 28 et d'alvéoles 29, chaque alvéole 29 autorisant les mouvements de battement, de trainée voire de pas d'une pale 19 du rotor 14.

Le sillage 5 généré par les parties hautes du giravion est alors défléchi vers le bas par la coupole 20.

Lors de la rotation de la calotte 25, un flux d'air incident 300 impacte successivement une surface pleine d'un créneau 28 et une ouverture d'une alvéole 29. Le flux d'air incident 300 peut alors impacter directement la face extérieure 32 de la calotte 25 au niveau d'un créneau 28 ou passer au travers d'une alvéole 29 puis à l'intérieur de la calotte 25 avant de venir impacter la face intérieure 31 de la calotte 25 au niveau d'un créneau 28 par exemple. On entend par l'expression « flux d'air impactant une alvéole » ou par une expression équivalente que le flux d'air se dirige sur une alvéole, et pénètre dans l'ouverture ménagée par l'alvéole. A l'inverse, le flux d'air impacte, en dehors des alvéoles, la surface pleine de la face intérieure et/ou de la face extérieure d'un créneau.

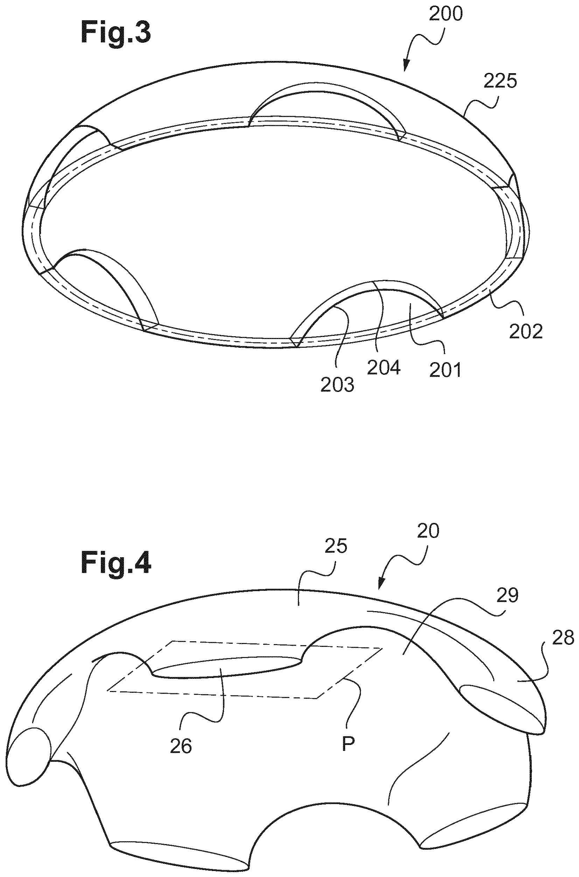

Telle que représentée à la figure 3, la coupole 200 de l'art antérieur comporte aussi une calotte 225 présentant une forme crénelée avec une succession de créneaux 202 et d'alvéoles 201 autorisant le mouvement de battement des pales 19 du rotor 14.

Cependant dans ce cas, les créneaux 202 comportent chacun une épaisseur constante dans un plan de coupe perpendiculaire à l'axe de rotation en élévation 100. Il y a alors des arêtes vives 203, 204 au niveau des intersections entre d'une part des découpes cylindriques ou coniques permettant de former les alvéoles 201 et d'autre part les faces intérieure et extérieure de la calotte 225.

Cette forme particulière des créneaux 202 n'est alors pas optimale pour limiter le coefficient de trainée aérodynamique et le sillage d'une telle coupole 200. En effet, au moins au niveau des arêtes vives 203, 204 il se produit des phénomènes de décollements intenses du flux d'air ce qui augmente le coefficient de trainée aérodynamique et le sillage de la coupole 200.

Comme représenté à la figure 4 et selon un premier mode de réalisation, la coupole 20 comporte une calotte 25 munie de créneaux 28 avec une forme de profil aérodynamique 26 au moins dans un plan P perpendiculaire à l'axe de rotation en élévation 100. Un tel plan P est avantageusement agencé à mi-hauteur des alvéoles 29.

En pratique, le profil aérodynamique 26 des créneaux 28 est qualifié comme étant un profil épais car il présente une épaisseur relative comprise entre 10 et 30%.

La forme particulière des créneaux 28 et des alvéoles 29 permet alors de générer un sillage pulsé qui interagit avec le sillage généré par la calotte 25. Le sillage global généré par la coupole 20 entraîne potentiellement une réduction de l'intensité globale du comportement dynamique du sillage 5 et tend à au moins limiter le décollement du sillage 5 dans la zone de décollement 17 située à proximité de capots moteur 16.

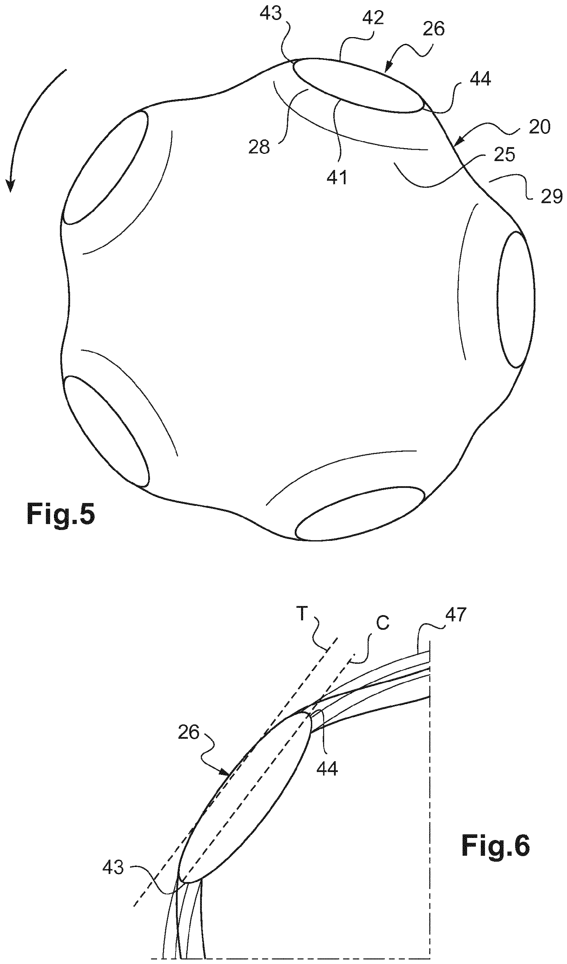

Tel que représenté à la figure 5, un tel profil 26 du créneau 28 comporte une épaisseur variable avec un extrados 42 formé par la face extérieure 32 de la calotte 25 et un intrados 41 formé par face intérieure 31 de la calotte 25. Le profil 26 comporte par ailleurs un bord d'attaque 43 arrondi et un bord de fuite 44 également arrondi.

Tels que représentés, le bord d'attaque 43 et le bord de fuite 44 peuvent comporter un même rayon de courbure. Par ailleurs, la forme générale du profil 26 peut présenter différentes formes. Ainsi tel que représenté aux figures 4 à 8 selon un premier exemple de profil des créneaux, le profil aérodynamique peut être une ellipse comportant un grand-axe confondu avec la corde du profil aérodynamique. Dans ce cas, le bord d'attaque 43 et le bord de fuite 44 sont symétriques par rapport au petit-axe de l'ellipse.

Telle que représentée à la figure 6, la corde C du profil 26 est définie comme étant la droite passant par le bord d'attaque 43 et le bord de fuite 44. Comme illustré aux figures 4 à 6 selon le premier mode de réalisation, une telle corde C peut être orientée parallèlement à une tangente T à une circonférence 47 formée par l'intersection entre la face extérieure 32 et le plan de coupe P.

Selon ce premier mode de réalisation, l'angle de calage α entre ces deux directions est donc nul en revanche selon d'autres modes de réalisations, un tel angle α peut également être compris entre -30° et +30°.

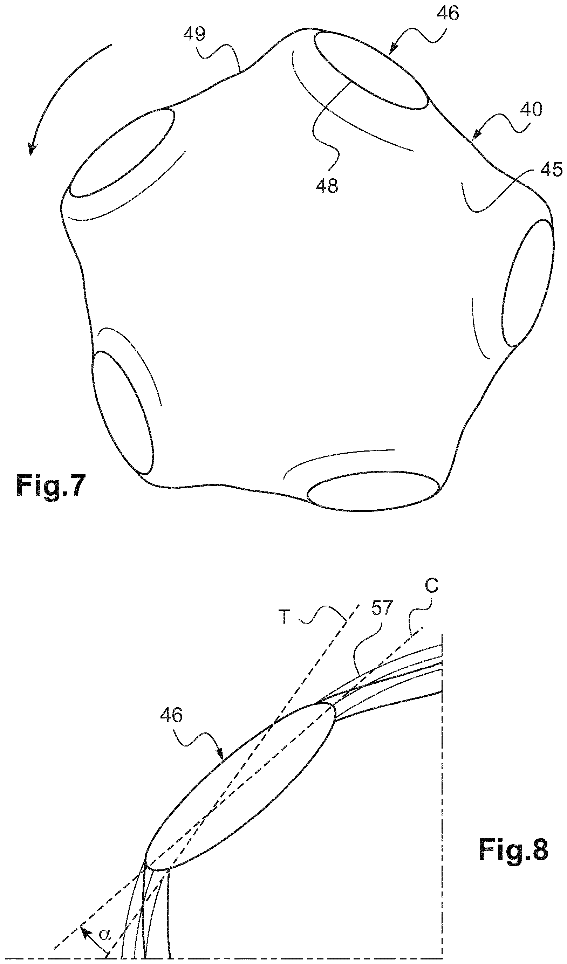

Ainsi selon un deuxième mode de réalisation tel que représenté aux figures 7 et 8, l'angle de calage α d'un profil 46 peut par exemple être égal à +15°. Telle que représentée à la figure 7, la coupole 40 comporte alors une calotte 45 crénelée définissant une succession de créneaux 48 et d'alvéoles 49. Les différents profils 46 des créneaux 48 peuvent alors avantageusement présenter un même angle de calage a.

Tel que représenté à la figure 8, l'angle de calage α est un angle orienté selon un sens anti-trigonométrique entre une corde C du profil 46 et une tangente T à la circonférence 57.

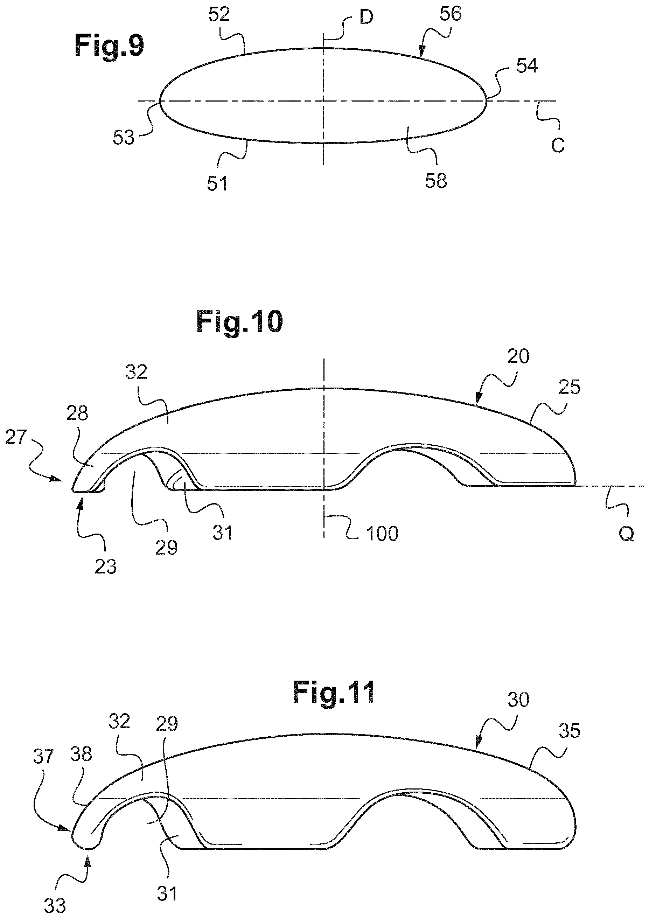

Tel que représenté à la figure 9 selon un second exemple de profil, le profil aérodynamique 56 peut être dissymétrique. Dans ce cas, l'extrados 52 et l'intrados 51 ne sont pas symétriques par rapport à la corde C.

Le profil 56 peut néanmoins être de type biconvexe et comporter une symétrie axiale par rapport à une ligne D perpendiculaire à la corde C. Dans ce cas, le bord d'attaque 53 et le bord de fuite 54 sont donc symétriques l'un par rapport à l'autre.

Tels que représentés à la figure 10 et selon une première variante de calotte 25, les créneaux 28 comportent chacun une face plane inférieure 23 agencée au niveau de la périphérie 27 pour rejoindre la face intérieure 31 avec la face extérieure 32 au niveau d'une extrémité libre de chaque créneau 28. Les différentes faces planes 23 permettent alors de définir un plan Q perpendiculaire à l'axe de rotation en élévation 100.

Selon une seconde variante de calotte 35 telle que représentée à la figure 11, la périphérie 37 peut être définie par les extrémités libres des créneaux 38 comportant une face bombée 33 pour rejoindre la face intérieure 31 avec la face extérieure 32 de la calotte 35. L'ensemble de ces faces bombées 33 peut alors s'inscrire dans une forme toroïdale concentrique avec la périphérie 37.

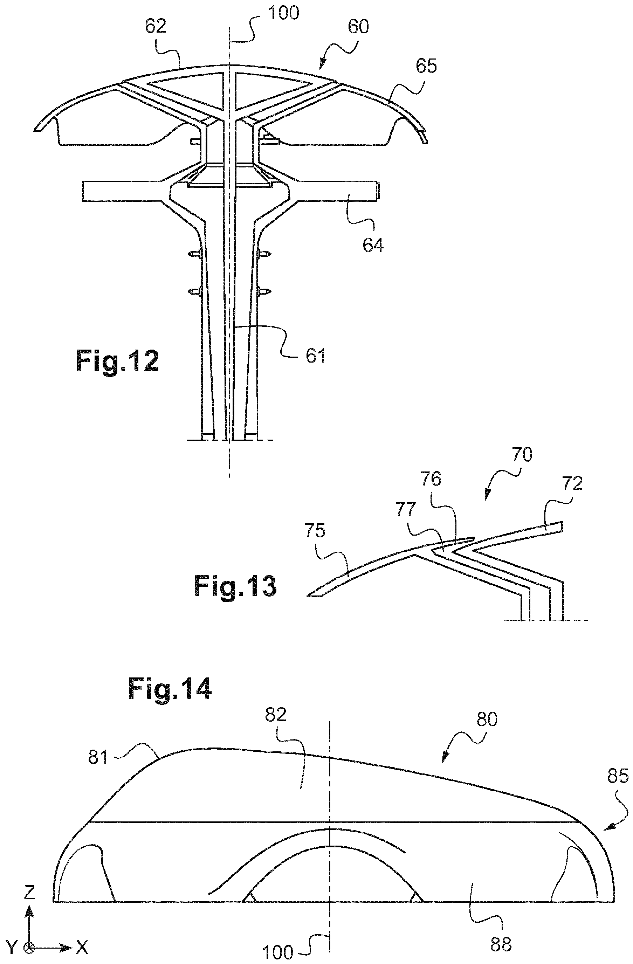

Tel que représenté à la figure 12 selon un troisième mode de réalisation, la coupole 60 peut comporter une calotte 65 solidarisée avec le rotor 64 et un plateau 62 fixe par rapport au châssis du giravion. Seule la calotte 65 doit comporter alors une forme de révolution pour ne pas perturber le flux d'air incident lors de sa rotation.

Le plateau 62 peut quant à lui présenter différentes formes et est relié via un mât 61 au châssis du giravion 10.

Tel que représenté à la figure 13 selon un quatrième mode de réalisation, la coupole 70 peut également comporter des zones de recouvrement 76 permettant de former un labyrinthe 77 entre la calotte 75 mobile en rotation avec le rotor et le plateau 72 solidaire du châssis du giravion. Un tel labyrinthe 77 permet alors encore d'optimiser l'aérodynamisme d'une telle coupole 70.

Tel que représenté à la figure 14 selon un cinquième mode de réalisation, la coupole 80 comporte un plateau 82 dont la forme n'est pas de révolution. En effet, dans le plan XZ défini par les directions X et Z, la forme du plateau 82 peut être profilée en étant plus haute dans une zone proximale 81 orientée vers l'avant du giravion 10, étant rappelé que le plateau 82 est solidaire et fixe par rapport au châssis du giravion.

Cette forme particulière du plateau 82 correspond alors à son profil longitudinal. Le profil transversal du plateau 82, c'est-à-dire sa vue de côté dans le plan YZ, peut quant à lui être différent du profil longitudinal du plateau 82 et conserver par exemple une forme sensiblement elliptique ou circulaire.

Comme pour les autres modes de réalisation, la calotte 85 comporte une forme crénelée munie de créneaux 88 présentant un profil aérodynamique. En revanche, contrairement au plateau 82, la calotte 85 présente quant à elle une géométrie de révolution autour de l'axe de rotation en élévation 100.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme définit dans le jeu de revendications.

## Revendications

1. Coupole (20, 30, 40, 60, 70, 80) destinée à un rotor (14) d'un giravion (10), ladite coupole (20, 30, 40, 60, 70, 80) comprenant une calotte (25, 35, 45, 65, 75, 85) s'étendant radialement d'un axe de rotation en élévation (100) vers une périphérie (27, 37) et en azimut sur 360 degrés, ladite calotte (25, 35, 45, 65, 75, 85) s'étendant en épaisseur entre une face intérieure (31) destinée à être en regard d'un moyeu (18) dudit rotor (14) et une face extérieure (32) surplombant de ladite face intérieure (31), ladite périphérie (27, 37) étant crénelée pour définir une succession de créneaux (28, 38, 48, 58, 88) et d'alvéoles (29, 39, 49), chaque alvéole (29, 39, 49) autorisant le mouvement de battement d'une pale (19) dudit rotor (14),
**caractérisée en ce que** lesdits créneaux (28, 38, 48, 58, 88) présentent chacun un profil aérodynamique (26, 46, 56) au moins dans un plan de coupe P perpendiculaire audit axe de rotation en élévation (100), ledit profil aérodynamique (26, 46, 56) présentant :
• une épaisseur variable mesurée entre ladite face intérieure (31) et ladite face extérieure (32),
• un extrados (42, 52) formé par ladite face extérieure (32) ainsi qu'un intrados (41, 51) formé par ladite face intérieure (31), et
• un bord d'attaque (43, 53) sensiblement arrondi comportant un premier rayon de courbure ainsi qu'un bord de fuite (44, 54) sensiblement arrondi comportant un second rayon de courbure.

2. Coupole selon la revendication 1,
**caractérisée en ce que** ledit plan de coupe P est positionné à mi-hauteur desdites alvéoles (29, 39, 49).

3. Coupole selon l'une quelconque des revendications 1 à 2,
**caractérisée en ce que** lesdits créneaux (28, 38, 48, 58, 88) de ladite calotte (25, 35, 45, 65, 75, 85) sont identiques entre eux.

4. Coupole selon l'une quelconque des revendications 1 à 3,
**caractérisée en ce que** le premier rayon de courbure du bord d'attaque (43, 53) des profils aérodynamiques (26, 46, 56) des créneaux (28, 38, 48, 58, 88) est égal au second rayon de courbure du bord de fuite (44, 54) des profils aérodynamiques (26, 46, 56) des créneaux (28, 38, 48, 58, 88).

5. Coupole selon l'une quelconque des revendications 1 à 4,
**caractérisée en ce que** ledit profil aérodynamique (26, 46) desdits créneaux (28, 38, 48, 88) est elliptique.

6. Coupole selon l'une quelconque des revendications 1 à 4,
**caractérisée en ce que** ledit profil aérodynamique (56) desdits créneaux (58) est dissymétrique.

7. Coupole selon l'une quelconque des revendications 1 à 6,
**caractérisée en ce que** ledit profil aérodynamique (26, 46, 56) desdits créneaux (28, 38, 48, 58, 88) présente une épaisseur relative comprise entre 10 et 30%.

8. Coupole selon l'une quelconque des revendications 1 à 7,
**caractérisée en ce que**, dans ledit plan de coupe P perpendiculaire audit axe de rotation en élévation (100), une corde C, définie comme étant la droite reliant ledit bord d'attaque (43) et ledit bord de fuite (44) dudit profil aérodynamique (26, 46) desdits créneaux (28, 48), est inclinée d'un angle α par rapport à une tangente T à une circonférence (47, 57) définie comme l'intersection entre ladite face extérieure (32) et ledit plan de coupe P, ledit angle α étant compris entre -30° et +30°.

9. Coupole selon l'une quelconque des revendications 1 à 8,
**caractérisée en ce que** lesdits créneaux (28, 48, 88) comportent chacun une face plane (23) inférieure agencée au niveau de ladite périphérie (27), ladite face plane (23) étant orientée perpendiculairement par rapport audit axe de rotation en élévation (100).

10. Coupole selon l'une quelconque des revendications 1 à 8,
**caractérisée en ce que** lesdits créneaux (38) comportent chacun une face bombée (33) inférieure agencée au niveau de ladite périphérie (37).

11. Rotor (14) de giravion (10) muni d'un moyeu (18) portant une pluralité de pales (19),
**caractérisé en ce que** ledit rotor (14) comporte une coupole (20, 30, 40, 60, 70, 80) selon l'une quelconque des revendications 1 à 10.

12. Giravion (10),
**caractérisé en ce que** ledit giravion (10) comporte au moins un rotor (14) selon la revendication 11.

## Patentansprüche

1. Kuppel (20, 30, 40, 60, 70, 80) für einen Rotor (14) eines Drehflügelflugzeugs (10), wobei die Kuppel (20, 30, 40, 60, 70, 80) eine Kappe (25, 35, 45, 65, 75, 85) aufweist, die sich radial von einer vertikalen Drehachse (100) zu einem Umfangsrand (27, 37) erstreckt und im Azimut über 360 Grad, wobei die Kappe (25, 35, 45, 65, 75, 85) sich in Dickenrichtung zwischen einer Innenseite (31), die dazu bestimmt ist, gegenüber einer Nabe (18) des Rotors (14) zu liegen, und einer Außenseite (32) erstreckt, die die Innenseite (31) überragt, wobei der Umfangsrand (27, 37) gezackt ist, um eine Aufeinanderfolge von Zacken (28, 38, 48, 58, 88) und Kammern (29, 39, 49) zu definieren, wobei jede Kammer (29, 39, 49) die Schlagbewegung eines Rotorblatts (19) des Rotors (14) erlaubt, **dadurch gekennzeichnet, dass** die Kammern (28, 38, 48, 58, 88) jeweils ein aerodynamisches Profil (26, 46, 56) mindestens in einer Schnittebene, die senkrecht zu der vertikalen Drehachse (100) verläuft, aufweisen, wobei das aerodynamische Profil (26, 46, 56) aufweist:
• eine variable Dicke, gemessen zwischen der Innenseite (31) und der Außenseite (32),
• eine Saugseite (42, 52), die von der Außenseite (32) gebildet wird, sowie eine Druckseite (41, 51), die von der Innenseite (31) gebildet wird, und
• eine Vorderkante (43, 53), die im Wesentlichen abgerundet ist und einen ersten Krümmungsradius aufweist sowie eine Hinterkante (44, 54), die im Wesentlichen abgerundet ist und einen zweiten Krümmungsradius aufweist.

2. Kuppel nach Anspruch 1,
**dadurch gekennzeichnet, dass** die Schnittebene P auf halber Höhe der Kammern (29, 39, 49) positioniert ist.

3. Kuppel nach einem der Ansprüche 1 bis 2,
**dadurch gekennzeichnet, dass** die Zacken (28, 38, 48, 58, 88) der Kappe (25, 35, 45, 65, 75, 85) untereinander identisch sind.

4. Kuppel nach einem der Ansprüche 1 bis 3,
**dadurch gekennzeichnet, dass** der erste Krümmungsradius der Vorderkante (43, 53) der aerodynamischen Profile (26, 46, 56) der Zacken (28, 38, 48, 58, 88) gleich dem zweiten Krümmungsradius der Hinterkante (44, 54) der aerodynamischen Profile (26, 46, 56) der Zacken (28, 38, 48, 58, 88) ist.

5. Kuppel nach einem der Ansprüche 1 bis 4,
**dadurch gekennzeichnet, dass** das aerodynamische Profil (26, 46) der Zacken (28, 38, 48, 58, 88) elliptisch ist.

6. Kuppel nach einem der Ansprüche 1 bis 4,
**dadurch gekennzeichnet, dass** das aerodynamische Profil (56) der Zacken (58) asymmetrisch ist.

7. Kuppel nach einem der Ansprüche 1 bis 6,
**dadurch gekennzeichnet, dass** das aerodynamische Profil (26, 46, 56) der Zacken (28, 38, 48, 58, 88) eine relative Dicke aufweist, die zwischen 10 und 30 % liegt.

8. Kuppel nach einem der Ansprüche 1 bis 7,
**dadurch gekennzeichnet, dass** in der Schnittebene P, senkrecht zu der vertikalen Rotationsachse (100), eine Sehne C, definiert als die Gerade, die die Vorderkante (43) und die Hinterkante (44) des aerodynamischen Profils (26, 46) der Zacken (28, 48) verbindet, mit einem Winkel α relativ zu einer Tangente T an dem Umfang (47, 57), die definiert ist als die Schnittlinie zwischen der Außenseite (32) und der Schnittebene P, geneigt ist, wobei der Winkel α schen -30° und +30° liegt.

9. Kuppel nach einem der Ansprüche 1 bis 8,
**dadurch gekennzeichnet, dass** die Zacken (28, 48, 88) jeweils eine untere ebene Seite (23) aufweisen, die auf der Höhe des Umfangs (27) angeordnet ist, wobei die ebene Seite (23) senkrecht zu der vertikalen Drehachse (100) ausgerichtet ist.

10. Kuppel nach einem der Ansprüche 1 bis 8,
**dadurch gekennzeichnet, dass** die Zacken (38) jeweils eine gewölbte innere Seite (33) aufweisen, die auf der Höhe des Umfangs (37) angeordnet ist.

11. Rotor (14) eines Drehflügelflugzeugs (10) mit einer Nabe (18), die eine Mehrzahl von Rotorblättern (19) trägt,
**dadurch gekennzeichnet, dass** der Rotor (14) eine Kuppel (20, 30, 40, 60, 70, 80) nach einem der Ansprüche 1 bis 10 aufweist.

12. Drehflügelflugzeug (10),
**dadurch gekennzeichnet, dass** das Drehflügelflugzeug (10) mindestens einen Rotor (14) nach Anspruch 11 aufweist.

## Claims

1. Cupola (20, 30, 40, 60, 70, 80) intended for a rotor (14) of a rotorcraft (10), said cupola (20, 30, 40, 60, 70, 80) comprising a cap (25, 35, 45, 65, 75, 85) extending radially from an axis of rotation in elevation (100) towards a periphery (27, 37) and extending in azimuth over 360 degrees, said cap (25, 35, 45, 65, 75, 85) extending in thickness between an inside face (31) intended to face a hub (18) of said rotor (14) and an outside face (32) overlying said inside face (31), said periphery (27, 37) being crenellated to define a succession of crenellations (28, 38, 48, 58, 88) and of notches (29, 39, 49), each notch (29, 39, 49) allowing the flapping motion of a blade (19) of said rotor (14),
**characterised in that** said crenellations (28, 38, 48, 58, 88) each have an aerodynamic profile (26, 46, 56) at least in a section plane P perpendicular to said axis of rotation in elevation (100), said aerodynamic profile (26, 46, 56) having:
• a variable thickness measured between said inside face (31) and said outside face (32),
• an upper surface (42, 52) formed by said outside face (32) and a lower surface (41, 51) formed by said inside face (31), and
• a substantially rounded leading edge (43, 53) comprising a first radius of curvature and a substantially rounded trailing edge (44, 54) comprising a second radius of curvature.

2. Cupola according to claim 1,
**characterised in that** said section plane P is positioned at half-height of said notches (29, 39, 49).

3. Cupola according to any one of claims 1 to 2,
**characterised in that** said crenellations (28, 38, 48, 58, 88) of said cap (25, 35, 45, 65, 75, 85) are identical to one another.

4. Cupola according to any one of claims 1 to 3,
**characterised in that** the first radius of curvature of the leading edge (43, 53) of the aerodynamic profiles (26, 46, 56) of the crenellations (28, 38, 48, 58, 88) is equal to the second radius of curvature (44, 54) of the aerodynamic profiles (26, 46, 56) of the crenellations (28, 38, 48, 58, 88) .

5. Cupola according to any one of claims 1 to 4,
**characterised in that** said aerodynamic profile (26, 46) of said crenellations (28, 38, 48, 88) is elliptical.

6. Cupola according to any one of claims 1 to 4,
**characterised in that** said aerodynamic profile (56) of said crenellations (58) is asymmetrical.

7. Cupola according to any one of claims 1 to 6,
**characterised in that** the aerodynamic profile (26, 46, 56) of said crenellations (28, 38, 48, 58, 88) has a relative thickness comprised between 10 and 30%.

8. Cupola according to any one of claims 1 to 7,
**characterised in that**, in said section plane P perpendicular to said axis of rotation in elevation (100), a chord C, defined as being the straight line connecting said leading edge (43) and said trailing edge (44) of said aerodynamic profile (26, 46) of said crenellations (28, 48), is inclined at an angle α relative to a tangent T to a circumference (47, 57) defined as the intersection between said outside face (32) and said section plane P, said angle α being comprises between -30° to +30°.

9. Cupola according to any one of claims 1 to 8,
**characterised in that** said crenellations (28, 48, 88) each comprise a plane bottom face (23) arranged at the level of said periphery (27), said plane face (23) being orientated perpendicularly relative to said axis of rotation in elevation (100) .

10. Cupola according to any one of claims 1 to 8,
**characterised in that** said crenellations (38) each comprise a rounded bottom face (33) arranged at the level of said periphery (37).

11. Rotor (14) of rotorcraft (10) provided with a hub (18) carrying a plurality of blades (19),
**characterised in that** said rotor (14) comprises a cupola (20, 30, 40, 60, 70, 80) according to any one of claims 1 to 10.

12. Rotorcraft (10),
**characterised in that** said rotorcraft (10) comprises at least one rotor (14) according to claim 11.
